# EUROPEAN PATENT APPLICATION

(11) **EP 3 479 794 A1**
(43) Date of publication of application: **08.05.2019**
(21) Application number: 17819653.1
(22) Date of filing: 01.05.2017
(51) Int. Cl.: A61C 5/70, A61C 13/00

(54) **DENTAL PROSTHESIS**

(30) Priority: 30.06.2016 JP 2016131020
(71) Applicant: GC Corporation, Sunto-gun, Shizuoka 410-1307 (JP)
(72) Inventor: SHINYA, Akikazu, Tokyo 102-8159 (JP); MIZUGUCHI, Yusuke, Tokyo 174-8585 (JP)
(74) Representative: Müller-Boré & Partner Patentanwälte PartG mbB
(86) International application number: PCT/JP2017/017179
(87) International publication number: WO 2018/003286

(57) **Abstract**

An embodiment of the present invention is a dental prosthesis (10) to cover an abutment tooth (A), which includes a groove (11a) formed in an inner side surface (11), wherein the depth of the groove (11a) from a cement space (C) is 20 to 120 µm.

## Description

### TECHNICAL FIELD

The present invention relates to dental prostheses.

### BACKGROUND ART

In general, dental prostheses such as crowns and bridges are fixed to abutment teeth through dental cement. Therefore, it is necessary to form a cement space between an abutment tooth and the inner surface of a dental prosthesis facing the abutment tooth.

In recent years, CAD/CAM systems and CAD systems have drawn attention.

CAD/CAM systems design a dental prosthesis using a computer, and thereafter make the dental prosthesis by cutting and grinding a block based on design data, using an automatic cutting and grinding machine. (See, for example, Patent Document 1.)

Here, as a material constituting the block, cured resin, a ceramic sintered body, a metal or the like is known.

Furthermore, CAD systems design a dental prosthesis using a computer, and thereafter make the dental prosthesis by curing a photocurable resin by exposing the photocurable resin to laser light thin section by thin section based on design data, using a stereolithography apparatus.

According to CAD/CAM systems and CAD systems, first, the impression of an intraoral shape of a patient, such as a tooth shape or a dentition, is taken using a dental impression material, and thereafter, a plaster model is made. Next, the three-dimensional coordinate information of the plaster model is measured using a three-dimensional coordinate measuring apparatus. Furthermore, a dental prosthesis is designed based on the three-dimensional coordinate information of the plaster model using a computer. At this point, the operation of designing the margin line of the dental prosthesis, the operation of designing the internal shape of the dental prosthesis by adding a thickness commensurate with a cement space to the plaster model, and the operation of designing the external shape of the dental prosthesis to be exposed in an oral cavity are performed on the plaster model.

In the case of using a CAD/CAM system, the dental prosthesis is made by selecting a material for a block to be processed, cutting and grinding the block using an automatic cutting and grinding machine, and thereafter trimming the block.

In the case of using a CAD system, the dental prosthesis is made by curing a photocurable resin by exposing the photocurable resin to laser light thin section by thin section, using a stereolithography apparatus.

### PRIOR ART DOCUMENT

### PATENT DOCUMENT

Patent Document 1: Japanese Laid-open Patent Publication No. 2002-224142

### SUMMARY OF THE INVENTION

### PROBLEMS TO BE SOLVED BY THE INVENTION

It is desired, however, to prevent removal of a dental prosthesis from an abutment tooth.

Here, it is known to roughen the inner surface of a dental prosthesis to cover an abutment tooth by sand blasting, but this method cannot satisfactorily prevent removal of the dental prosthesis from the abutment tooth.

An embodiment of the present invention has an object of providing a dental prosthesis that can prevent removal from an abutment tooth.

### MEANS FOR SOLVING THE PROBLEMS

An embodiment of the present invention is a dental prosthesis to cover an abutment tooth, which includes a groove formed in an inner side surface, wherein the depth of the groove from a cement space is 20 to 120 µm.

### EFFECTS OF THE INVENTION

According to an embodiment of the present invention, it is possible to provide a dental prosthesis that can prevent removal from an abutment tooth.

### BRIEF DESCRIPTION OF THE DRAWINGS

FIG. 1 is a diagram illustrating a dental prosthesis according to this embodiment.
FIG. 2 is a diagram illustrating an example of a three-dimensional coordinate measuring apparatus used for the manufacture of the dental prosthesis of FIG. 1.
FIG. 3 is a diagram illustrating an example of a tool used in forming an inner surface of the dental prosthesis of FIG. 1.

### EMBODIMENT OF THE INVENTION

Next, an embodiment of the present invention is described.

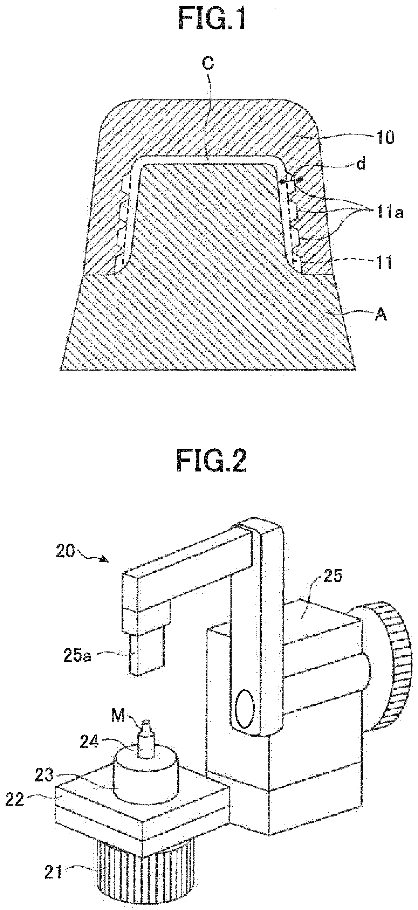

FIG. 1 illustrates a crown 10 as an example of a dental prosthesis according to this embodiment.

The crown 10 is exposed in an oral cavity, and includes an outer surface forming the shape of a tooth and an inner surface shaping a hollow to cover an abutment tooth A.

Here, a cement space C is formed between the inner surface of the crown 10 and the abutment tooth A.

Grooves 11a are continuously formed in an inner side surface 11 of the crown 10 in its circumferential direction.

A depth d of the grooves 11a from the cement space C is 20 to 120 µm, and is preferably 50 to 100 µm. When the depth d of the grooves 11a from the cement space C is less than 20 µm, it is difficult to prevent removal of the crown 10 from the abutment tooth A. The depth d in excess of 120 µm does not improve the effect of preventing removal of the crown 10 from the abutment tooth A.

In the specification and the claims, the depth d of the grooves 11a from the cement space C means a distance between the bottom surface of the grooves 11a and the cement space C in a region where the grooves 11a are not formed, namely, the cement space C in the case of assuming that the grooves 11a are not formed.

The width of the grooves 11a is preferably 240 to 330 µm.

The pitch of the grooves 11a is preferably 280 to 380 µm.

Cross-sectional shapes of the grooves 11a, which are not limited in particular as long as it is possible to prevent removal from the abutment tooth A, include a rectangular shape, a trapezoidal shape, a semi-circular shape, and a semi-elliptical shape, of which two or more may be used together.

The maximum thickness of the cement space C is preferably 15 to 120 µm.

The grooves 11a may be intermittently formed in the inner side surface 11 in its circumferential direction.

The grooves 11a may be helically formed in the inner side surface 11. In this case, the grooves 11a may be formed either continuously or intermittently.

Next, a method of manufacturing the crown 10 is described.

First, the impression of an intraoral shape of a patient, such as a tooth shape or a dentition, is taken using a dental impression material, and thereafter, a plaster model is made. Next, the three-dimensional coordinate information of the plaster model of the intraoral shape is measured using a three-dimensional coordinate measuring apparatus.

FIG. 2 illustrates an example of the three-dimensional coordinate measuring apparatus.

A three-dimensional coordinate measuring apparatus 20 includes a turntable 21 with a rotating shaft whose shaft center defines the Z-axis, an XY table 22 placed on the turntable 21 and movable along the X-axis and the Y-axis, and a placement table 23 fixed onto the XY table 22. A measurement object attachment mount 24 to which a measurement object M is attachable may be placed on the placement table 23.

The three-dimensional coordinate measuring apparatus 20 further includes a three-dimensional coordinate measuring part 25 that measures the three-dimensional coordinates of the measurement object M with a laser sensor 25a that can pivot about a desired point on the Z-axis in the same plane including the Z-axis and move along the Z-axis.

Next, a method of measuring the three-dimensional coordinates of the measurement object M using the three-dimensional coordinate measuring apparatus 20 is described.

First, the measurement object M is attached to the measurement object attachment mount 24, and the measurement object attachment mount 24 is thereafter placed on the placement table 23. Next, the measurement object M is exposed to laser light by pivoting the laser sensor 25a while rotating the turntable 21, thereby measuring the three-dimensional coordinates of the measurement object M.

Next, the crown 10 is designed based on the three-dimensional coordinate information of the plaster model of an intraoral shape. For example, the crown 10 is designed by deforming the visible outline of the margin line of the crown 10 based on the plaster model of the intraoral shape graphically displayed three-dimensionally on the CRT display of a computer such that the margin line of the crown 10 coincides with the margin line of the abutment tooth A. Furthermore, the shape of the inner surface of the crown 10 facing the abutment tooth A is designed by adding a thickness commensurate with the cement space C to the plaster model of the intraoral shape. In addition, the shape of the outer surface of the crown 10 to be exposed in the oral cavity is designed based on the three-dimensional graphics of a dentition on the abutment tooth A side and a dentition on the antagonist tooth side.

In the above-described manner, the designing of the crown 10 is completed.

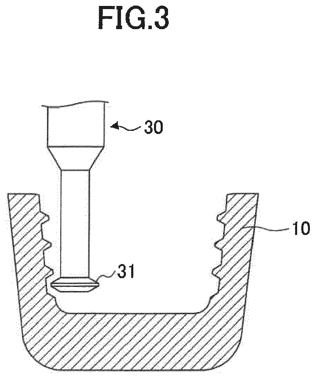

For example, in the case of using a CAD/CAM system, a block is cut and ground using a cutting and grinding machine and is thereafter trimmed, so that the outer surface and the inner surface of the crown 10 are formed. At this point, for example, the inner surface of the crown 10 is formed by cutting the block, using a cutting tool (see FIG. 3) having a disk-shaped rotatable working part 31 at its tip. This makes it possible to control the depth d from the cement space C, the width, the pitch, and the cross-sectional shape of the grooves 11a.

Materials of the block, which are not limited in particular, include a cured resin, a ceramic sintered body, and a metal.

In the case of using a CAD system, the crown 10 is made by curing a photocurable resin by exposing the photocurable resin to laser light thin section by thin section using a stereolithography apparatus.

The crown 10 may be manufactured using a lost wax process.

Next, a method of fixing the crown 10 to the abutment tooth A.

First, the crown 10 is put on the abutment tooth A, and it is determined whether the crown 10 fits. When the crown 10 does not fit, the shape of the outer surface and the shape of the inner surface of the crown 10 can be easily adapted by slightly cutting and grinding unfit parts. When the crown 10 fits, a dental cement is applied to the cement space C, and the crown 10 is thereafter put on and fixed to the abutment tooth A.

According to this embodiment, bridges, etc., may be used as other dental prostheses to cover abutment teeth than crowns.

The present international application is based on and claims priority to Japanese patent application No. 2016-131020, filed on June 30, 2016, the entire contents of which are hereby incorporated herein by reference.

### DESCRIPTION OF THE REFERENCE NUMERALS

10 crown
11 inner side surface
11a groove
A abutment tooth
C cement space
20 three-dimensional coordinate measuring apparatus
21 turntable
22 XY table
23 placement table
24 measurement object attachment mount
25 three-dimensional coordinate measuring part
25a laser sensor
M measurement object
30 cutting tool
31 working part

## Claims

1. A dental prosthesis to cover an abutment tooth, the dental prosthesis comprising:
a groove formed in an inner side surface,
wherein a depth of the groove from a cement space is 20 to 120 µm.

2. The dental prosthesis as claimed in claim 1, wherein the groove is formed in a circumferential direction of the inner side surface.
